(19) Europäisches Patentamt
European Patent Office
Office européen des brevets

(11) **EP 2 239 303 A1**

(12) **DEMANDE DE BREVET EUROPEEN**

(43) Date de publication:
**13.10.2010 Bulletin 2010/41**

(51) Int Cl.:
***C08L 95/00*** *(2006.01)*

(21) Numéro de dépôt: **10305365.8**

(22) Date de dépôt: **09.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **09.04.2009 FR 0952320**

(71) Demandeur: **COLAS**
**92100 Boulogne-Billancourt (FR)**

(72) Inventeurs:
• **DURAND, Graziella**
**78460, CHEVREUSE (FR)**
• **ROBERT, Michel**
**94440, VILLECRESNES (FR)**
• **POIRIER, Jean Eric**
**78180, MONTIGNY LE BRETONNEUX (FR)**

(74) Mandataire: **Michelet, Alain et al**
**Cabinet Harlé et Phélip**
**7, rue de Madrid**
**75008 Paris (FR)**

(54) **Alliages de bitume et de polymeres - polymerisation dans la masse du bitume**

(57)     L'invention concerne un procédé de production d'un liant bitumineux modifié, lequel procédé comporte une étape de polycondensation in situ, dans un liant bitumineux routier, de molécules de base ; l'invention concerne également le liant bitumineux modifié obtenu par le procédé de l'invention ; et l'invention concerne enfin l'utilisation pour tout type d'application routière d'un tel liant bitumineux modifié.

**Description**

L'invention concerne un procédé de production d'un liant bitumineux modifié. L'invention concerne également l'utilisation pour tout type d'application routière d'un tel liant bitumineux modifié.

La modification de liants bitumineux par des polymères permet d'améliorer certaines de leurs caractéristiques physiques et mécaniques. Pour cela, on fait généralement appel à deux grandes familles de polymères : les polymères thermodurcissables et les polymères thermoplastiques. Les premiers durcissent de façon irréversible sous l'action de la température, les autres ramollissent et deviennent malléables avec la chaleur de façon réversible. Comme agent de modification de liants bitumineux, il est encore possible d'utiliser du caoutchouc, naturel ou synthétique, le plus souvent en mélange dans une huile compatibilisante.

On utilise le plus souvent des polymères thermoplastiques, d'une part des élastomères tels que le SBS (Styrène-Butadiène-Styrène), le SIS (Styrène-Isoprène-Styrène), le SB (Styrène-Butadiène) et le SBR (Caoutchouc Butadiène-Styrène), et d'autre part des plastomères tels que l'EVA (Ethylène-Acétate de vinyle), l'EMA (Ethylène-Acrylate de méthyle), l'EBA (Ethylène-Acrylate de butyle) et le PIB (Polyisobutylène).

Les procédés de production de liants bitumineux modifiés peuvent consister en un simple mélange physique entre un liant bitumineux et un ou plusieurs polymères.

Un tel mélange peut aussi être accompagné d'une réaction chimique entre le bitume contenu dans le liant bitumineux d'origine et le ou les polymères qui y sont introduits. Il existe ainsi une technique de production de liant bitumineux modifiés par des élastomères qui permet, par réticulation avec du soufre, de lier chimiquement le ou les polymères au bitume, et ainsi d'améliorer leur compatibilité. Il existe également des polymères capables de réagir avec les fonctions acide carboxylique du bitume qui permettent d'obtenir des liants bitumineux modifiés stables au stockage, tels les polymères de type EGA (Ethylène-Acétate de Glycidyle) qui comprennent des fonctions époxyde. Enfin, depuis quelques années, une méthode basée sur l'ajout d'additifs de type acide polyphosphorique permet de modifier un liant bitumineux, qu'il soit de type bitume pur ou bitume-polymère, afin d'en améliorer les caractéristiques.

L'invention est un procédé de production de liant bitumineux modifié amélioré, dans lequel l'introduction, dans un liant bitumineux routier, de molécules capables de réagir entre elles et/ou avec le bitume, permet la formation d'un polymère dans la masse du liant.

Un tel procédé permet d'obtenir un matériau composite bitume-polymère qui procure d'excellentes caractéristiques au liant bitumineux obtenu, notamment un très bon comportement au stockage. Les enrobés qui en sont issus possèdent des propriétés différentes selon les molécules introduites, notamment une résistance améliorée à la fissuration thermique, une résistance améliorée à la fatigue, une résistance améliorée aux hydrocarbures, une résistance améliorée à l'orniérage, et/ou des performances mécaniques améliorées se traduisant par une augmentation du module.

De tels liants bitumineux modifiés peuvent être destinés à toutes les applications routières possibles et donc être utilisés aussi bien pour réaliser des enrobés bitumineux classiques que des enrobés plus spécifiques tels que les enrobés à module élevé, les revêtements anti-kérosène ou les enrobés minces. Ils peuvent être utilisés à chaud comme à froid pour réaliser des couches d'accrochage, des enduits superficiels ou des enrobés.

Ainsi, un procédé de production d'un liant bitumineux modifié selon l'invention comporte une étape de polycondensation in situ, dans un liant bitumineux routier L, de molécules de base consistant en des molécules A et en des molécules B.

Selon l'invention, les molécules de base A et B sont des monomères soit des molécule qui peuvent subir une polymérisation en contribuant des unités constitutionnelles à la structure essentielle d'une macromolécule.

L'invention comprend différents modes de réalisation, présentant chacun des avantages spécifiques, et pouvant éventuellement être combinés selon toutes les combinaisons techniquement possibles.

Dans certains modes de réalisation, le liant bitumineux routier L n'intervient pas dans la réaction chimique de polycondensation.

Dans ce cas, avantageusement :

- les molécules A sont choisies parmi les molécules comportant au moins deux fonctions amine, alcool ou époxyde ;
- les molécules A et les molécules B, aptes à réagir par polycondensation in situ avec les molécules A, sont introduites dans le liant bitumineux routier L, sous agitation, à une température comprise entre 100°C et 200°C, de préférence entre 160°C et 200°C, et sont laissées réagir pendant une durée comprise entre 1 h et 10 h ;
- les molécules A, de même que les molécules B, représentent de 1 à 15% en poids, et de préférence de 2 à 10% en poids, par rapport au poids du liant bitumineux routier L ;
- les molécules A et les molécules B sont introduites simultanément ou successivement, l'ordre dans lequel elles sont introduites étant indifférent.

Dans d'autres modes de réalisation, le procédé comporte :

(a) l'introduction dans le liant bitumineux routier L des molécules A, lesdites molécules A étant aptes à se greffer par réaction chimique sur des molécules dudit liant bitumineux routier L, et
(b) l'introduction dans le produit bitumineux P obtenu à l'étape (a) des molécules B, lesdites molécules B étant aptes à réagir par polycondensation in situ avec des molécules dudit produit bitumineux P.

L'invention comporte alors les caractéristiques suivantes, pouvant éventuellement être combinées selon toutes les combinaisons techniquement possibles :

- le liant bitumineux routier L est choisi parmi les liants bitumineux routiers ayant des fonctions acides ;
- les molécules A sont introduites en excès par rapport aux molécules du liant bitumineux routier L, sur lesquelles elles sont aptes à se greffer par réaction chimique ;
- les molécules A sont choisies parmi les molécules comportant au moins deux fonctions amine, alcool ou époxyde ;
- les molécules A sont introduites dans le liant bitumineux routier L, sous agitation, à une température comprise entre 100°C et 200°C, de préférence entre 140°C et 160°C, et sont laissées réagir pendant une durée comprise entre 10 min et 3 h ;
- les molécules A représentent de 1 à 15% en poids, et de préférence de 2 à 10% en poids, par rapport au poids du liant bitumineux routier L ;
- les molécules du produit bitumineux P obtenu à l'étape (a) sont essentiellement :

  o les précurseurs de polycondensation obtenus à l'étape (a) par greffage de molécules A sur des molécules du liant bitumineux routier L ; et
  o les molécules A excédentaires introduites à l'étape (a), qui n'ont donc pas réagi avec des molécules du liant bitumineux routier L ;

- les molécules B sont introduites dans le produit bitumineux P, sous agitation, à une température comprise entre 100°C et 200°C, de préférence entre 160°C et 200°C, et sont laissées réagir pendant une durée comprise entre 1 h et 10 h ;
- les molécules B représentent de 1 à 15% en poids, et de préférence de 2 à 10% en poids, par rapport au poids du liant bitumineux routier L.

Dans d'autres modes de réalisation, le procédé comporte :

(a) l'introduction dans le liant bitumineux routier L de molécules C et d'un agent de vulcanisation, lesdites molécules C étant aptes à se greffer par vulcanisation sur des molécules dudit liant bitumineux routier L,
(b) l'introduction dans le produit bitumineux P obtenu à l'étape (a) des molécules B, lesdites molécules B étant aptes à réagir chimiquement sur des molécules dudit produit bitumineux P, et
(c) l'introduction dans le produit bitumineux Q obtenu à l'étape (b) des molécules A, lesdites molécules A étant aptes à réagir par polycondensation in situ avec des molécules dudit produit bitumineux Q.

L'invention comporte alors les caractéristiques suivantes, pouvant éventuellement être combinées selon toutes les combinaisons techniquement possibles :

- le liant bitumineux routier L choisi ne possède pas forcément de fonctions acides ;
- les molécules C ne sont pas introduites en excès par rapport aux molécules du liant bitumineux routier L, sur lesquelles elles sont aptes à se greffer par vulcanisation en présence d'un agent de vulcanisation ;
- les molécules C sont choisies parmi les molécules comportant au moins une insaturation ne faisant pas partie d'un noyau aromatique et au moins une fonction amine, alcool ou époxyde ;
- les molécules C sont choisies par exemple parmi le 1-aminononadéc-9-ène, le 1-aminooctadéc-9-ène, le 1-aminotétradéc-4-ène, le 1-aminodéc-2-ène, les acrylates d'aminoéthyle, les diallylamines, le 1-hydroxy-9-octadécène, le 1-hydroxy-5-tétradécène, le vinylphénol, le vinylnaphtol, le (méth)acrylate de glycidyle et le vinyléther de glycidyle ;
- les molécules C sont introduites dans le liant bitumineux routier L, sous agitation, à une température comprise entre 100°C et 200°C, de préférence entre 150°C et 170°C, et sont laissées réagir pendant une durée comprise entre 30 min et 3 h ;
- les molécules C représentent de 0,5 à 5% en poids, et de préférence de 1 à 2% en poids, par rapport au poids du liant bitumineux routier L ;
- l'agent de vulcanisation est introduit après les molécules C ;
- l'agent de vulcanisation choisi est le soufre ou un donneur de soufre, de préférence le soufre ;
- le donneur de soufre est généralement un polysulfure d'alkyle, par exemple le disulfure de dihexyle, le trisulfure de dioctyle ou le pentasulfure de dihexadécyle, un polysulfure de thiurame, un disulfure d'alcoylphénol ou le disulfure de morpholine ;

- l'agent de vulcanisation représente de 0,01 à 1% en poids, et de préférence de 0,05 à 0,1% en poids, par rapport au poids du liant bitumineux routier L ;
- les molécules B sont introduites en excès par rapport aux molécules du produit bitumineux P obtenu à l'étape (a), sur lesquelles elles sont aptes à réagir chimiquement ;
- les molécules du produit bitumineux P obtenu à l'étape (a) sont essentiellement les molécules obtenues à l'étape (a) par greffage des molécules C sur des molécules du liant bitumineux routier L ;
- les molécules B sont introduites dans le produit bitumineux P, sous agitation, à une température comprise entre 100°C et 200°C, de préférence entre 140°C et 160°C, et sont laissées réagir pendant une durée comprise entre 1 h et 3 h ;
- les molécules B représentent de 1 à 15% en poids, et de préférence de 2 à 10% en poids, par rapport au poids du liant bitumineux routier L ;
- les molécules A introduites sont aptes à réagir par polycondensation in situ avec des molécules du produit bitumineux Q obtenu à l'étape (b) ;
- les molécules du produit bitumineux Q obtenu à l'étape (b) sont essentiellement :

  o les précurseurs de polycondensation obtenus à l'étape (b) par greffage de molécules B sur des molécules du produit bitumineux P ; et
  o les molécules B excédentaires introduites à l'étape (b), qui n'ont donc pas réagi avec des molécules du produit bitumineux P ;

- les molécules A sont choisies parmi les molécules comportant au moins deux fonctions amine, alcool ou époxyde ;
- les au moins deux fonctions portées par les molécules A sont identiques à l'au moins une fonction portée par les molécules C ;
- les molécules A sont introduites dans le produit bitumineux Q, sous agitation, à une température comprise entre 100°C et 200°C, de préférence entre 160°C et 200°C, et sont laissées réagir pendant une durée comprise entre 1 h et 10 h ;
- les molécules A représentent de 1 à 15% en poids, et de préférence de 2 à 10% en poids, par rapport au poids du liant bitumineux routier L.

Quel que soit le mode de réalisation, les molécules B sont avantageusement choisies parmi les molécules comportant au moins deux fonctions chimiques identiques aptes à réagir avec des molécules comportant au moins une fonction amine, alcool ou époxyde.

Dans le cas de molécules A (et éventuellement C) comportant au moins deux fonctions amine, les molécules B peuvent être des molécules comportant au moins deux fonctions acide carboxylique, aminoacide ou époxyde.

Dans le cas de molécules A (et éventuellement C) comportant au moins deux fonctions alcool, les molécules B peuvent être des molécules comportant au moins deux fonctions acide carboxylique ou isocyanate.

Dans le cas de molécules A (et éventuellement C) comportant au moins deux fonctions époxyde, les molécules B peuvent être des molécules comportant au moins deux fonctions amine, acide carboxylique ou anhydride d'acide, de préférence au moins deux fonctions amine.

Les molécules comportant au moins deux fonctions amine sont préférentiellement choisies parmi les composés de la famille des di- ou polyalkylèneamines, linéaires ou ramifiées, de préférence parmi les composés de la famille des di- ou polyéthylèneamines, et plus particulièrement parmi la diéthylènetriamine, la triéthylènetétraamine, la tétraéthylènepentaamine et la pentaéthylènehexaamine. On parle d'additif « de type amine ».

Les molécules comportant au moins deux fonctions alcool, elles sont préférentiellement choisies parmi les di- à hexaols aliphatiques, à chaîne linéaire ou ramifiée, de préférence parmi les pentaols et les hexaols aliphatiques, à chaîne linéaire ou ramifiée, et plus particulièrement parmi le sorbitol, le mannitol, le xylitol et le ribitol. On parle d'additif « de type alcool ».

Les molécules comportant au moins deux fonctions époxyde sont préférentiellement choisies parmi les diépoxydes aliphatiques ou aromatiques, à chaîne linéaire ou ramifiée, et leurs dérivés, de préférence parmi les diépoxydes aromatiques, à chaîne linéaire ou ramifiée, et leurs dérivés, et plus particulièrement parmi les dérivés du diglycidyle éther de bisphénol A. On parle d'additif « de type époxyde ».

Enfin, les molécules comportant au moins deux fonctions acide carboxylique sont préférentiellement choisies parmi les di-, tri- ou tétraacides carboxyliques aliphatiques, à chaîne linéaire ou ramifiée, de préférence parmi les diacides carboxyliques aliphatiques, à chaîne linéaire ou ramifiée, et plus particulièrement parmi l'acide adipique et l'acide sébacique. On parle d'additif « de type acide carboxylique ».

Selon un mode de réalisation avantageux, le procédé de production d'un liant bitumineux modifié de l'invention comporte une étape de polycondensation in situ, dans un liant bitumineux routier L, de molécules de base consistant en :

- 1 à 15% en poids par rapport au poids du liant bitumineux routier de molécules A choisies parmi les molécules comportant au moins deux fonctions amine, alcool ou époxyde ; et
- 1 à 15% en poids par rapport au poids du liant bitumineux routier de molécules B comportant au moins deux fonctions chimiques identiques aptes à réagir avec des molécules comportant au moins une fonction amine, alcool ou époxyde, sous réserve que :

  - lorsque les molécules de base A comprennent au moins deux fonctions amine, les molécules B comprennent au moins deux fonctions acide carboxylique, aminoacide ou époxyde, ou
  - lorsque les molécules de base A comprennent au moins deux fonctions alcool, les molécules B comprennent au moins deux fonctions acide carboxylique ou isocyanate, ou
  - lorsque les molécules de base A comprennent au moins deux fonctions époxyde, les molécules B comprennent au moins deux fonctions amine.

La présente invention concerne également le liant bitumineux modifié obtenu par le procédé de l'invention, ainsi que son utilisation pour tout type d'application routière.

L'ensemble des caractéristiques et avantages de la présente invention ressortiront mieux des exemples qui suivent, donnés à titre illustratif et non limitatif.

Les essais de caractérisation qui sont mis en oeuvre pour faire ressortir les propriétés des produits résultant de l'invention sont les suivants :

Pénétrabilité à 25°C - NF EN 1426

La pénétrabilité permet de déterminer la dureté d'un bitume. Elle consiste à enfoncer une aiguille dans un prélèvement de bitume à 25°C. La profondeur mesurée est exprimée en dixièmes de millimètres et détermine le grade d'un bitume. Plus l'aiguille s'est enfoncée, plus le grade d'un bitume est élevé.

Température bille et anneau (TBA) - NF EN 1427

Cette méthode permet de déterminer la température de ramollissement du bitume. Elle consiste à placer une bille en acier sur un anneau de bitume (placé dans de l'eau) et à augmenter la température à une vitesse constante de 5°C/min. Sous le poids de la bille, le bitume se déforme et la température dite de ramollissement est enregistrée lorsqu'il y a un abaissement de 25 mm.

Température Fraass - NF EN 12593

Cette méthode permet de mesurer la fragilité d'un liant hydrocarboné aux basses températures. Le point de fragilité Fraass est la température, exprimée en °C, à laquelle un film de liant bitumineux d'une épaisseur donnée et uniforme se fissure sous des conditions de charge définies.

Cohésion au mouton-pendule (CMP) - NF EN 13588

La cohésion des liants bitumineux est une des mesures de la performance des enduits superficiels. Cet essai permet de déterminer l'aptitude d'un liant à résister à la rupture dans la masse provoquée par l'arrachement des granulats sous l'influence du trafic. Un cube d'acier de surface donnée est fixé à un support par l'intermédiaire d'un film de liant. L'ensemble est amené à la température d'essai, puis le cube est arraché par l'impact d'un mouton-pendule. L'énergie absorbée par la rupture est calculée à partir de l'angle de remontée du pendule après le choc.

Essai d'adhésivité passive des liants anhydres en présence d'eau - NF XP T 66-043

Cette méthode permet de déterminer l'adhésivité entre un liant anhydre et les granulats en présence d'eau. L'adhésivité passive d'un liant est sa capacité à résister au désenrobage en présence d'eau. Les granulats enrobés sont immergés dans l'eau dans des conditions déterminées. La valeur de l'adhésivité passive est donnée par le pourcentage évalué de surface restant couverte de liant après un temps d'immersion.

Intervalle de plasticité

C'est la différence entre la température Fraass (température en dessous de laquelle le liant devient cassant) et la température bille et anneau (température au dessus de laquelle le liant devient trop mou). C'est la plage de température à l'intérieur de laquelle le liant possède une consistance qui lui permet de n'être ni trop fragile ni trop mou. On peut considérer cet intervalle comme la plage de températures de service d'un liant bitumineux.

Indice de pénétrabilité (IP)

L'indice de pénétrabilité (IP) caractérise la susceptibilité d'un liant à la température. Il se déduit des mesures de pénétration à 25°C et de la température bille et anneau. Plus l'indice de pénétrabilité est élevé, meilleure est la susceptibilité du liant considéré. Cet indice est calculé pour une pénétrabilité mesurée à 25°C. La formule, définie dans le cadre des bitumes purs, mais utilisée ici pour les bitumes modifiés, est donc la suivante :

$$\frac{\log 800 - \log P}{TBA - 25} = \frac{1}{50} \times \frac{20 - IP}{10 + IP}$$

Module complexe G* - NF EN 14770

Une déformation sinusoïdale d'amplitude définie et de fréquence déterminée (10 Hz) est appliquée à l'échantillon maintenu à une température contrôlée (15°C). On mesure la réponse du liant à cette déformation : la contrainte sinusoïdale résultante. A partir de ces valeurs, il est possible de déterminer les principales caractéristiques du liant en oscillation et notamment le module complexe et l'angle de phase.

G*, module complexe : rapport de l'amplitude de la contrainte sur l'amplitude de la déformation, en oscillation sinusoïdale harmonique.

$\delta$, angle de phase : déphasage entre la contrainte et la déformation, en oscillation sinusoïdale harmonique.

On a réalisé les liants bitumineux routiers de type bitumes-polymères de la manière décrite ci-après.

1/ Obtention de liants bitumineux routiers comprenant un bitume greffé (première étape du procédé)

Exemple 1

Dans un mélangeur de type Rayneri, un additif « de type amine », tel que le diéthylènetriamine (DETA) ou le tétraéthylènepentaamine (TEPA), est ajouté à un bitume pur naphténique 35/50, noté Bitume (1), sous agitation à une température de 150°C puis maintenu sous agitation pendant 15 minutes. Le mélange est ensuite conservé dans une enceinte climatique à la même température pendant 3 heures sous agitation manuelle régulière.

Les caractéristiques obtenues sont les suivantes :

|  |  | Bitume (1) | Bitume (1) + 2% DETA | Bitume (1) + 2% TEPA |
|---|---|---|---|---|
| Pénétrabilité | 1/10 mm | 68 | 94 | 82 |
| TBA | °C | 46,4 | 43 | 45 |
| Fraass | °C | -12 | -16 | -13 |
| Stabilité au stockage (ΔTBA) | °C |  | 0 | 0 |
| Cohésion (CMP) | J/cm$^2$ | 0,57 |  | 0,73 |
| Adhésivité sur calcaire | % | 90 | 100 | 100 |

Les liants obtenus sont stables au stockage et possèdent des caractéristiques améliorées en ce qui concerne leur cohésion et leurs propriétés d'adhésion aux granulats.

Exemple 2

Dans un mélangeur de type Rayneri, un additif « de type époxyde », tel que le diglycidyléther de bisphénol A (DER 331, Dow Chemicals), est ajouté à un bitume pur naphténique 50/70, noté Bitume (2), sous agitation à une température de 160°C puis maintenu sous agitation pendant 2 heures.

Les caractéristiques obtenues sont les suivantes :

|  |  | Bitume (2) | Bitume (2) +2% DER 331 | Bitume (2) +4% DER 331 |
|---|---|---|---|---|
| Pénétrabilité | 1/10 mm | 68 | 47 | 82 |
| TBA | °C | 46,4 | 49,6 | 49,6 |
| Fraass | °C | -12 | -14,5 | -20 |
| Intervalle de plasticité | °C | 58,4 | 64,1 | 69,6 |

Les liants obtenus possèdent des propriétés à froid améliorées, ce qui se traduit par une augmentation de la plage de températures d'utilisation de ces liants bitumineux (intervalle de plasticité).

2/ Obtention de liants bitumineux routiers de type bitumes-polymères

Exemple 3

Dans un mélangeur de type Rayneri, des additifs « de type amine » et « de type acide carboxylique », tels que le tétraéthylènepentaamine (TEPA) et l'acide citrique, respectivement, sont ajoutés au Bitume (1) (bitume pur naphténique 35/50), sous agitation lente à une température de l'ordre de 140-150°C (élimination lente de l'eau produite par la réaction) puis la température est élevée jusqu'à 200°C. Le mélange est alors maintenu sous agitation pendant plusieurs heures. Les réactions de ces additifs conduisent à l'obtention d'un bitume-polyamide.
Les caractéristiques obtenues sont les suivantes :

|  |  | Bitume (1) | Bitume (1) + 7,5% polyamide de synthèse | Bitume (1) + 3% TEPA + 4,5% acide citrique | Bitume (1) + 6% TEPA + 9% acide citrique |
|---|---|---|---|---|---|
| Pénétrabilité | 1/10 mm | 42 | 36 | 19 | 18 |
| TBA | °C | 51,0 | 54,4 | 64,0 | 63,2 |
| IP |  | -1,3 | -0,9 | -0,2 | -0,5 |
| G* (15°C/10 Hz) | % | 30 | 38 | 54 | 55 |

Seule la fabrication dans la masse selon l'invention permet d'obtenir des liants de grade dur possédant des propriétés rhéologiques à températures intermédiaires améliorées : module complexe à 15°C.

Exemple 4

Dans un mélangeur de type Rayneri, des additifs « de type époxyde » et « de type amine », tels que le diglycidyléther de bisphénol A et de bisphénol F (DER 351) et le diéthylènetriamine (DETA), respectivement, sont ajoutés au Bitume (2) (bitume pur naphténique 50/70), sous agitation à une température de 160°C. Le mélange est maintenu sous agitation à 160°C pendant 1 heure.
Les caractéristiques obtenues sont les suivantes :

|  |  | Bitume (2) | Bitume (2) + 5% DER 351 + 1% DETA |
|---|---|---|---|
| Pénétrabilité | 1/10 mm | 56 | 62 |
| TBA | °C | 49,6 | 80,5 |
| IP |  | -1,04 | 5,0 |

Les liants ainsi obtenus possèdent des températures de ramollissement bille et anneau très nettement améliorées, ce qui se traduit par une diminution de leur susceptibilité thermique (intervalle de pénétrabilité : IP>>0).

**Revendications**

1. Procédé de production d'un liant bitumineux modifié, **caractérisé en ce qu'**il comporte une étape de polycondensation in situ, dans un liant bitumineux routier L, de molécules de base consistant en des molécules A et en des molécules B.

2. Procédé selon la revendication 1, **caractérisé en ce qu'**il comporte :

(a) l'introduction dans le liant bitumineux routier L des molécules A, lesdites molécules A étant aptes à se greffer par réaction chimique sur des molécules dudit liant bitumineux routier L, et
(b) l'introduction dans le produit bitumineux P obtenu à l'étape (a) des molécules B, lesdites molécules B étant aptes à réagir par polycondensation in situ avec des molécules dudit produit bitumineux P.

**3.** Procédé selon la revendication 1, **caractérisé en ce qu'**il comporte :

(a) l'introduction dans le liant bitumineux routier L de molécules C et d'un agent de vulcanisation, lesdites molécules C étant aptes à se greffer par vulcanisation sur des molécules dudit liant bitumineux routier L,
(b) l'introduction dans le produit bitumineux P obtenu à l'étape (a) des molécules B, lesdites molécules B étant aptes à réagir chimiquement sur des molécules dudit produit bitumineux P, et
(c) l'introduction dans le produit bitumineux Q obtenu à l'étape (b) des molécules A, lesdites molécules A étant aptes à réagir par polycondensation in situ avec des molécules dudit produit bitumineux Q.

**4.** Procédé selon la revendication 2, **caractérisé en ce que** le liant bitumineux routier L est choisi parmi les liants bitumineux routiers ayant des fonctions acides.

**5.** Procédé selon la revendication 2, **caractérisé en ce que** les molécules A sont introduites en excès par rapport aux molécules du liant bitumineux routier L, sur lesquelles elles sont aptes à se greffer par réaction chimique.

**6.** Procédé selon la revendication 3, **caractérisé en ce que** les molécules C sont choisies parmi les molécules comportant au moins une insaturation ne faisant pas partie d'un noyau aromatique et au moins une fonction amine, alcool ou époxyde.

**7.** Procédé selon la revendication 3, **caractérisé en ce que** l'agent de vulcanisation est introduit après les molécules C.

**8.** Procédé selon la revendication 3, **caractérisé en ce que** les molécules B sont introduites en excès par rapport aux molécules du produit bitumineux P obtenu à l'étape (a), sur lesquelles elles sont aptes à réagir chimiquement.

**9.** Procédé selon l'une quelconque des revendications 1 à 3, **caractérisé en ce que** les molécules A sont choisies parmi les molécules comportant au moins deux fonctions amine, alcool ou époxyde.

**10.** Procédé selon l'une quelconque des revendications 1 à 3, **caractérisé en ce que** les molécules B sont choisies parmi les molécules comportant au moins deux fonctions chimiques identiques aptes à réagir avec des molécules comportant au moins une fonction amine, alcool ou époxyde.

Europäisches
Patentamt

European
Patent Office

Office européen
des brevets

# RAPPORT DE RECHERCHE EUROPEENNE

Numéro de la demande

EP 10 30 5365

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 98/47967 A (ELF ANTAR FRANCE [FR]; PLANCHE JEAN PASCAL [FR]; MALDONADO PAUL [FR];) 29 octobre 1998 (1998-10-29) * page 3, ligne 13 - page 18, ligne 14; revendications * | 1-10 | INV. C08L95/00 |
| X | GB 1 584 504 A (SHELL INT RESEARCH) 11 février 1981 (1981-02-11) * page 1, ligne 27 - page 3, ligne 18; revendications; exemples * | 1-10 | |
| X | US 4 139 511 A (HAYASHI SHIGEYUKI ET AL) 13 février 1979 (1979-02-13) * colonne 1, ligne 35 - colonne 5, ligne 11; revendications; exemples * | 1-10 | |
| X | EP 0 409 683 A (ELF FRANCE [FR] ELF ANTAR FRANCE [FR]) 23 janvier 1991 (1991-01-23) * page 2, ligne 18 - page 8, ligne 26; revendications; exemple 3 * | 1-10 | |
| | | | **DOMAINES TECHNIQUES RECHERCHES (IPC)** |
| X | US 5 256 710 A (KRIVOHLAVEK DENNIS [US]) 26 octobre 1993 (1993-10-26) * colonne 2, ligne 60 - colonne 4, ligne 13; revendications; exemples * | 1-10 | C08L E01C |
| X | EP 0 842 982 A (DAICEL CHEM [JP]) 20 mai 1998 (1998-05-20) * page 3, ligne 48 - page 12, ligne 16; revendications; exemples * | 1,2,4,5, 9,10 | |
| X | WO 94/11443 A (SHELL INT RESEARCH [NL]) 26 mai 1994 (1994-05-26) * page 3, ligne 10 - page 14, ligne 8; revendications; exemples * | 1,2,4,5, 9,10 | |
| | -/-- | | |

Le présent rapport a été établi pour toutes les revendications

| Lieu de la recherche | Date d'achèvement de la recherche | Examinateur |
|---|---|---|
| Munich | 19 juillet 2010 | Otegui Rebollo, Juan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 10 30 5365

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 443 932 A (INST FRANCAIS DU PETROLE [FR]) 28 août 1991 (1991-08-28) * colonne 2, ligne 3 - colonne 4, ligne 52; revendications; exemples * ----- | 1,2,4,5, 9,10 | |
| X | EP 0 219 399 A (SCREG ROUTES & TRAVAUX [FR]) 22 avril 1987 (1987-04-22) * page 2, ligne 44 - page 3, ligne 53; revendications; exemples * ----- | 1,2,4,5, 9,10 | |
| X | WO 97/03253 A (INTERFACE INC [US]) 30 janvier 1997 (1997-01-30) * page 2, ligne 22 - page 10, ligne 2; revendications; exemples * ----- | 1,2,4,5, 9,10 | |
| X | EP 0 695 788 A (COLAS SA [FR]) 7 février 1996 (1996-02-07) * page 2, ligne 23 - page 4, ligne 9; revendications; exemples * ----- | 1,3-5,9, 10 | |
| X | WO 00/11111 A (URECOATS INTERNATIONAL INC [US]) 2 mars 2000 (2000-03-02) * page 2, ligne 35 - page 6, ligne 8; figures; exemples * * page 7, ligne 32 - page 14, ligne 21; revendications * ----- | 1,2,4,5, 9,10 | DOMAINES TECHNIQUES RECHERCHES (IPC) |
| X | FR 1 101 463 A (BLOEMINK FREDERIK) 6 octobre 1955 (1955-10-06) * le document en entier * ----- | 1,2,4,5, 9,10 | |

Le présent rapport a été établi pour toutes les revendications

| Lieu de la recherche | Date d'achèvement de la recherche | Examinateur |
|---|---|---|
| Munich | 19 juillet 2010 | Otegui Rebollo, Juan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 10 30 5365

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-2010

| Document brevet cité au rapport de recherche | | Date de publication | Membre(s) de la famille de brevet(s) | | Date de publication |
|---|---|---|---|---|---|
| WO 9847967 | A | 29-10-1998 | AT | 278740 T | 15-10-2004 |
| | | | AU | 7437298 A | 13-11-1998 |
| | | | BR | 9804860 A | 24-08-1999 |
| | | | CA | 2258801 A1 | 29-12-1998 |
| | | | CN | 1226909 A | 25-08-1999 |
| | | | DE | 69826802 D1 | 11-11-2004 |
| | | | DE | 69826802 T2 | 01-12-2005 |
| | | | EP | 0907687 A1 | 14-04-1999 |
| | | | ES | 2234117 T3 | 16-06-2005 |
| | | | FR | 2762323 A1 | 23-10-1998 |
| | | | HK | 1022164 A1 | 25-06-2004 |
| | | | ID | 22213 A | 16-09-1999 |
| | | | KR | 20000022071 A | 25-04-2000 |
| | | | NO | 986013 A | 19-02-1999 |
| | | | US | 6218449 B1 | 17-04-2001 |
| GB 1584504 | A | 11-02-1981 | AUCUN | | |
| US 4139511 | A | 13-02-1979 | JP | 1385233 C | 26-06-1987 |
| | | | JP | 53063424 A | 06-06-1978 |
| | | | JP | 60045225 B | 08-10-1985 |
| EP 0409683 | A | 23-01-1991 | AR | 244750 A1 | 30-11-1993 |
| | | | AT | 104323 T | 15-04-1994 |
| | | | AU | 623029 B2 | 30-04-1992 |
| | | | AU | 5961390 A | 17-01-1991 |
| | | | BR | 9006843 A | 27-08-1991 |
| | | | CA | 2033973 A1 | 31-12-1990 |
| | | | DE | 69008067 D1 | 19-05-1994 |
| | | | DE | 69008067 T2 | 03-11-1994 |
| | | | DK | 0409683 T3 | 29-08-1994 |
| | | | ES | 2055363 T3 | 16-08-1994 |
| | | | FR | 2649117 A1 | 04-01-1991 |
| | | | WO | 9100315 A1 | 10-01-1991 |
| | | | JP | 2991770 B2 | 20-12-1999 |
| | | | JP | 4500831 T | 13-02-1992 |
| | | | NO | 910767 A | 21-03-1991 |
| | | | TR | 26553 A | 15-03-1995 |
| | | | US | 5120777 A | 09-06-1992 |
| US 5256710 | A | 26-10-1993 | AUCUN | | |
| EP 0842982 | A | 20-05-1998 | US | 5925695 A | 20-07-1999 |
| WO 9411443 | A | 26-05-1994 | DE | 69309952 D1 | 22-05-1997 |
| | | | DE | 69309952 T2 | 14-08-1997 |

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 10 30 5365

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-2010

| Document brevet cité au rapport de recherche | | Date de publication | Membre(s) de la famille de brevet(s) | | Date de publication |
|---|---|---|---|---|---|
| WO 9411443 | A | | EP | 0667886 A1 | 23-08-1995 |
| | | | JP | 8503237 T | 09-04-1996 |
| | | | US | 5278207 A | 11-01-1994 |
| EP 0443932 | A | 28-08-1991 | CA | 2036576 A1 | 22-08-1991 |
| | | | DE | 69100599 D1 | 16-12-1993 |
| | | | DE | 69100599 T2 | 10-03-1994 |
| | | | FR | 2658527 A1 | 23-08-1991 |
| | | | JP | 4216868 A | 06-08-1992 |
| | | | US | 5104932 A | 14-04-1992 |
| EP 0219399 | A | 22-04-1987 | CA | 1280835 C | 26-02-1991 |
| | | | DE | 3671639 D1 | 05-07-1990 |
| | | | FR | 2588009 A1 | 03-04-1987 |
| | | | US | 4724245 A | 09-02-1988 |
| WO 9703253 | A | 30-01-1997 | AT | 279591 T | 15-10-2004 |
| | | | AU | 699812 B2 | 17-12-1998 |
| | | | AU | 6456396 A | 10-02-1997 |
| | | | CA | 2226855 A1 | 30-01-1997 |
| | | | DE | 69633627 D1 | 18-11-2004 |
| | | | DE | 69633627 T2 | 02-02-2006 |
| | | | EP | 0843761 A1 | 27-05-1998 |
| | | | JP | 11508841 T | 03-08-1999 |
| | | | US | 5972271 A | 26-10-1999 |
| | | | US | 5981010 A | 09-11-1999 |
| | | | US | 5763036 A | 09-06-1998 |
| EP 0695788 | A | 07-02-1996 | AT | 218600 T | 15-06-2002 |
| | | | DE | 69526886 D1 | 11-07-2002 |
| | | | DE | 69526886 T2 | 16-01-2003 |
| | | | DK | 695788 T3 | 09-09-2002 |
| | | | ES | 2176298 T3 | 01-12-2002 |
| | | | FR | 2723375 A1 | 09-02-1996 |
| | | | PT | 695788 E | 31-10-2002 |
| WO 0011111 | A | 02-03-2000 | AU | 5573599 A | 14-03-2000 |
| | | | BR | 9913081 A | 12-03-2002 |
| | | | CA | 2341202 A1 | 02-03-2000 |
| | | | EP | 1159082 A2 | 05-12-2001 |
| | | | MX | PA01001705 A | 06-09-2004 |
| FR 1101463 | A | 06-10-1955 | AUCUN | | |

Pour tout renseignement concernant cette annexe : voir Journal Officiel de l'Office européen des brevets, No.12/82

EPO FORM P0460